# EUROPEAN PATENT SPECIFICATION

(11) **EP 0 580 923 B1**
(45) Date of publication and mention of the grant of the patent: **15.10.1997**
(21) Application number: 92830428.6
(22) Date of filing: 30.07.1992
(51) Int. Cl.: H02M 3/156, H02M 1/14

(54) **Device comprising an error amplifier, a control portion and a circuit for detecting voltage variations in relation to a set value**
Steuerungsteil und Fehlerverstärker enthaltende Vorrichtung mit einer Schaltung zum Messen der auf einen Spannungssollwert bezogenen Spannungsschwankungen
Dispositif comprenant un amplificateur d'erreur, un élément de commande et un circuit pour la détection de variations de tension en relation avec une tension de référence

(43) Date of publication of application: 02.02.1994
(73) Proprietor: SGS-THOMSON MICROELECTRONICS s.r.l., 20041 Agrate Brianza (Milano) (IT)
(72) Inventor: Borgato, Pierandrea, I-22050 Lomagna (IT); Diazzi, Claudio, I-20135 Milano (IT); Pidutti, Albino, I-33100 Udine (IT)
(74) Representative: Prato, Roberto

(56) References cited:
- EP-A- 0 123 745
- EP-A- 0 123 745
- EP-A- 0 369 118
- EP-A- 0 431 778
- EP-A- 0 473 925
- WO-A-85/01621
- US-A- 4 204 219
- US-A- 4 701 720
- SOVIET PATENTS ABSTRACTS Section EI, Week 8822, 2 June 1988 Derwent Publications Ltd., London, GB; Class U22, AN 88-154376 & SU-1350829 (MOSC ENG PHYS INST) 7 November 1987
- PATENT ABSTRACTS OF JAPAN vol. 016, no. 171 (P-1343)24 April 1992 & JP-A-4015887 (MITSUBISHI ELECTRIC CORP.) 21 January 1992
- PATENT ABSTRACTS OF JAPAN vol. 10, no. 119 (P-453)(2176) 6 May 1986 & JP-A-60247718 (NITSUSHIN DENKI K.K.) 7 December 1985
- PATENT ABSTRACTS OF JAPAN vol. 014, no. 452 (P-1112)27 September 1990 & JP-A-2181663 (NISSAN MOTOR CO. LTD.) 16 July 1990
- JOURNAL OF PHYSICS E/SCIENTIFIC INSTRUMENTS, June 1987, Bristol, GB, pages 634-635

## Description

The present invention relates to a device comprising an error amplifier and a circuit for detecting voltage variations in relation to a set value, according to the preamble of claim 1.

The present invention is especially suitable for use on boost-type switch power supply circuits, for detecting and limiting overvoltages in relation to a set value, to which the following description refers purely by way of example.

Power supply circuits are circuits for converting an alternating-current voltage into a given direct-current output voltage. On boost-type switch power supply circuits, a control circuit is provided for controlling on-off operation of a power transistor which, when on, permits charging of an inductor to the current required for achieving a given output voltage (greater than the input voltage), and, when off, allows discharging of the inductor, via a diode, to the load. An output capacitor is also provided for reducing the ripple produced by switching of the power transistor.

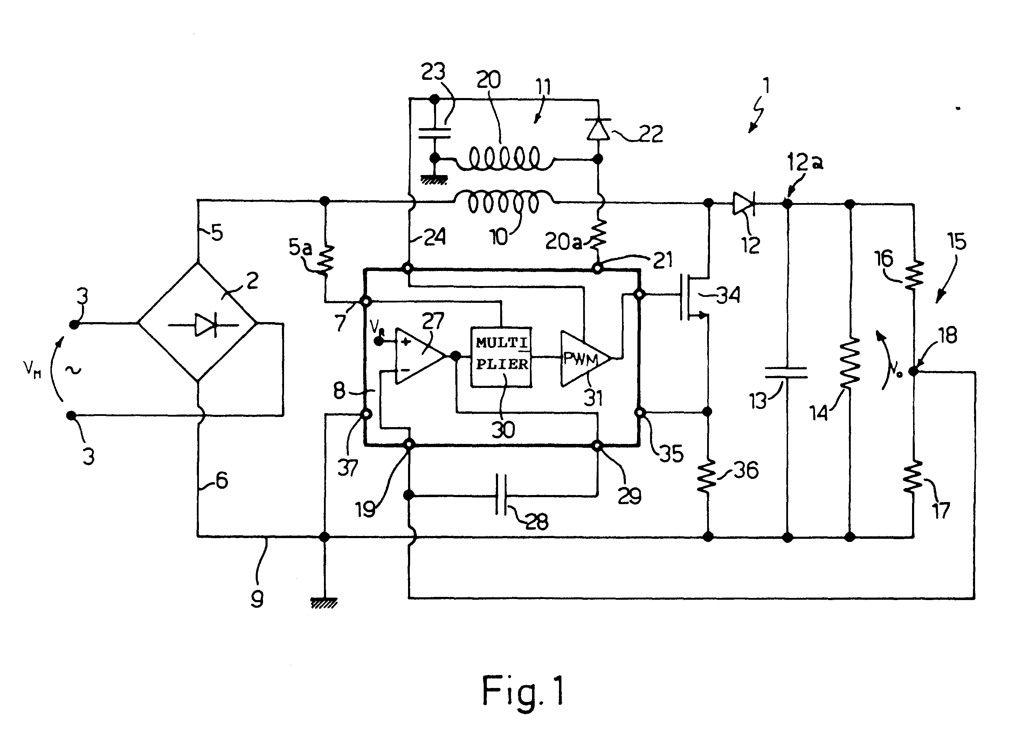

A known circuit of the aforementioned type to which the preamble of claim 1 refers, is shown by way of reference in Fig.1, wherein the power supply circuit is indicated as a whole by 1 and substantially comprises a rectifying bridge 2 having input terminals 3 between which a sinusoidal input voltage V_{M} is present, and output terminals 5, 6. Terminal 5 is connected, via resistor 5a, to the input pin 7 of a control circuit 8, normally an integrated circuit; and terminal 6 to a reference potential line (ground) 9. Output terminal 5 is also connected to one terminal of winding 10 of transformer 11, the other terminal of which is connected to the anode of diode 12. Between the cathode of diode 12 (defining output terminal 12a of power supply circuit 1) and ground, there are connected in parallel a capacitor 13, load 14, and a divider 15 including a pair of resistors 16 and 17 and having a tap or node 18 connected to input pin 19 of control circuit 8.

Transformer 11 comprises a second winding 20 having one terminal grounded, and the other terminal connected to pin 21 of control circuit 8, via resistor 20a, and to the anode of diode 22. Between the cathode of diode 22 and ground, there is provided a capacitor 23, and the cathode of diode 22 is also connected to pin 24 of control circuit 8.

Control circuit 8 substantially comprises an error amplifier 27 having the positive input connected to reference voltage V_{R}, and the negative input connected to input pin 19 of control circuit 8. Between the inverting input and the output of error amplifier 27, there is connected a compensating capacitor 28 normally external to control circuit 8 and connected between input pin 19 and a further input pin 29 of circuit 8. The output of error amplifier 27 is connected to one input of a multiplier stage 30, a second input of which is connected to pin 7, and the output of which is connected to a control stage 31 also connected to pin 24. The output of control stage 31 is connected to the gate terminal of a power MOS transistor 34. Control stage 31 comprises the control logic for turning transistor 34 on and off, and also provides for driving transistor 34, which presents the drain terminal connected to the anode of diode 12, and the source terminal connected to pin 35 of control circuit 8. Finally, a resistor 36 is provided between the source terminal of transistor 34 and ground, and control circuit 8 presents a pin 37 connected to ground line 9.

A similar circuit to that shown in fig. 1 and above described is also disclosed in WO-A-85/01621, wherein the input voltage is a DC voltage and the compensating capacitor has not been shown.

A major drawback of the Fig.1 circuit is that it fails to instantly eliminate sharp overvoltages at the output caused, for example, by a sharp variation in load 14. This is due to the limited response of control circuit 8, which must be so designed as to be unaffected by variations in output voltage of twice the frequency of input voltage V_{M}.

To overcome the above drawback, a further divider is provided at the output, in parallel to divider 15, for picking up a signal proportional to the instantaneous value of output voltage Vₒ . The tap of the additional divider is connected to the input of a hysteresis comparator built into control circuit 8 and which compares the incoming signal with a reference voltage and, in the event this is exceeded, supplies a turn-off signal to control stage 31, which turns off transistor 34 until output voltage Vₒ is restored to the correct value.

Such a solution however requires a special pin on control circuit 8 for receiving the signal picked up by the additional divider. As such, it cannot be applied to ' all control circuits 8, particularly those mounted in eight-pin packages in which no pins are available for the purpose.

Soviet Inventions Illustrated, Derwent Publication Ltd., SU-A-1 350 828 discloses an A/D signal processing amplifier-limiter, including an input operational amplifier connected in inverted mode by a feedback network including a capacitor and base-to-emitter junctions. The operational amplifier does not operate in linear mode, and the base-to-emitter junctions belong to two current flow direction sensors, the outputs whereof are connected to comparators and to a coincidence gate to control three switches determining the polarity of the output voltage. The output voltage of the circuit is not controlled through the operational amplifier and the current sensors do not generate signals proportional to the variations of the circuit output voltage with respect to a preset value (output voltage error).

EP-A-0 113 745 discloses a step waveform generator including an input operational amplifier having a feedback network including a current mirror. Also here, the operational amplifier does not operate as an error amplifier, the output voltage of the circuit is not controlled by the operational amplifier, and no current sensor for detecting the current flowing at the output of the operational amplifier and for generating a signal proportional to the variation of the circuit output voltage is present.

It is an object of the present invention to provide a device including a circuit for detecting voltage variations, and which does not require an additional pin for picking up external signals at the output.

According to the present invention, there is provided a device comprising an error amplifier, a control portion and a circuit for detecting voltage variations in relation to a set value, as claimed in Claim 1.

A preferred, non-limiting embodiment of the present invention will be described by way of example with reference to the accompanying drawings, in which:
Fig.1 shows the circuit diagram of a known switch power supply circuit to which the detecting circuit according to the present invention may be applied;
Fig.2 shows a block diagram of one embodiment of the detecting circuit according to the present invention;
Fig.3 shows a circuit diagram implementing the Fig.2 block diagram.

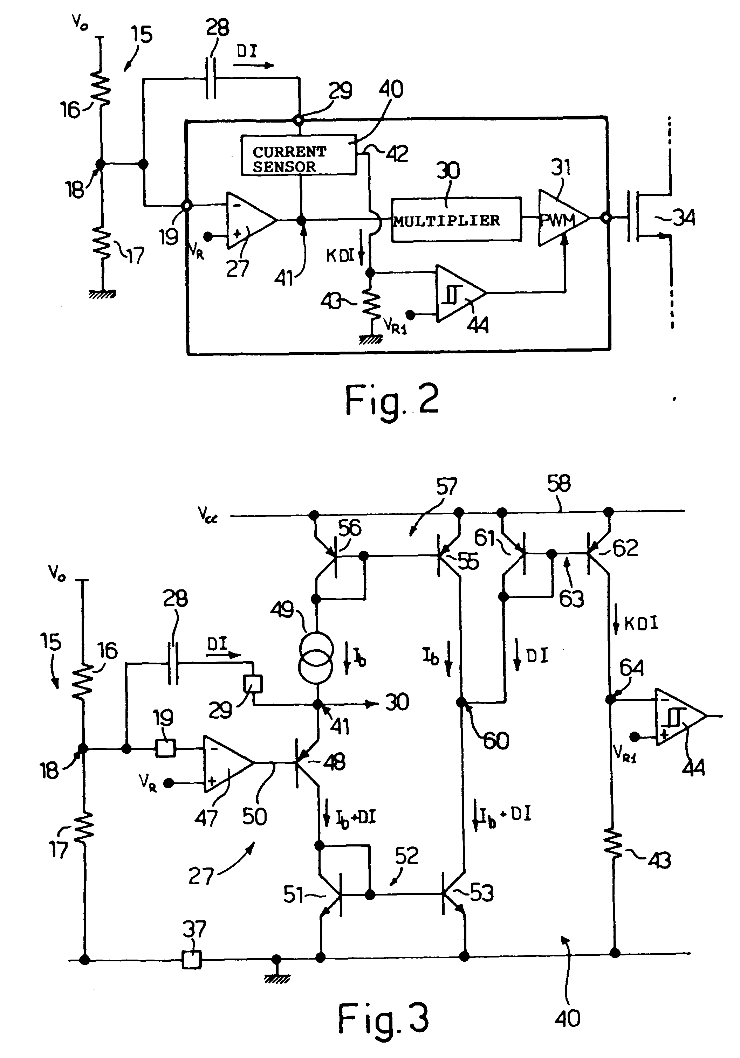

In Fig.2, only control circuit 8, compensating capacitor 28, divider 15 and transistor 34 of pbwer supply circuit 1 are shown, all the other components being identical to those in Fig.1 and having no bearing on the following description. Wherever possible, any parts in common with the Fig.1 diagram are indicated using the same reference numbers.

Number 40 in Fig.2 indicates a circuit for detecting variations in output voltage in relation to a set value, and which, according to the present invention, comprises means for detecting the current through compensating capacitor 28, which current is instantly proportional to variations in output voltage Vₒ. Said means are advantageously integrated in control circuit 8 for eliminating the need for an additional pin on the package.

More specifically (Fig.2), detecting circuit comprises a current sensor 40, here located between pin 29 and output 41 of error amplifier 27, for generating at output 42 a signal KDI proportional to the current in capacitor 28. In the Fig.2 example, current signal KDI is converted into a voltage signal via a resistor 43 between output 42 of sensor 40 and ground, and is supplied to the negative input of a hysteresis comparator 44, the positive input of which presents reference potential V_{R1}. The output of hysteresis comparator 44 is supplied to control and drive stage 31 for turning off transistor 34 when the output voltage exceeds the threshold defined by reference potential V_{R1}.

The Fig.2 circuit operates as follows.

In power supply circuit 1 (with reference also to Fig.1), the current through resistor 17, located between tap 18 and ground and of resistance R₁, may be considered constant and equal to V_{R}/R₁, by virtue of resistor 17 being connected to the inverting input of error amplifier 27. Under steady state operating conditions, when output voltage Vₒ of power supply circuit 1 equals the set value, said current is also equal to the current through resistor 16 connected to the cathode of diode 12 (Fig.1) and of resistance R₂.

Under such conditions, the current through capacitor 28 is therefore zero, and, by virtue of supplying no current, the final stage of error amplifier 27 is in the bias condition.

If, for any reason, a variation occurs in output voltage Vₒ, e.g. an increase of DVₒ, this is detected solely by resistor 16, the current of which thus increases by an amount DI equal to DVₒ/R₂, which current DI flows through capacitor 28 and is detected by sensor 40, which generates a signal KDI at output 42 proportional to current DI. Resistor 43 thus generates at its terminals a voltage drop proportional to current DI and consequently to DVₒ, and which is compared with V_{R1} by hysteresis comparator 44 defining an overvoltage limiting circuit. By appropriately setting V_{R1}, it is therefore possible to regulate the variation threshold of output voltage Vₒ above which the output of the hysteresis comparator switches and turns off transistor 34.

According to a preferred embodiment of the present invention, current DI through capacitor 28 is determined by current sensor 40 as the difference between the instantaneous current through the output stage of error amplifier 27 and the bias current of the same, by virtue of both, as stated, being equal under steady state operating conditions of the power supply circuit.

One implementation of the above solution is shown by way of example in Fig.3, which shows divider 15 with resistors 16, 17, capacitor 28, resistor 43 and hysteresis comparator 44. In Fig.3, amplifier 27 is represented by a preamplifier 47 and a final stage including an output transistor 48 and a current source 49 supplying bias current I_{b}. More specifically, preamplifier 47 presents a positive input at reference potential V_{R}, a negative input connected to pin 19 (and consequently tap 18), and the output 50 connected to the base terminal of output transistor 48, in this case a PNP type. The emitter terminal of transistor 48 defines output 41 of error amplifier 27, while the collector terminal is connected to that of an NPN type transistor 51 of a current mirror circuit 52 forming part of current sensor 40.

Transistor 51 presents its emitter connected to ground line 9 (via pin 37), and its base shortcircuited with the collector and connected to the base of an NPN type transistor 53 forming current mirror circuit 52 together with transistor 51. Transistor 53 presents its emitter grounded and its collector connected to that of a transistor 55 forming a current mirror circuit 57 together with transistor 56. Transistors 55 and 56 are both PNP types, and present mutually connected bases, and emitters connected to a supply line 58 at potential V_{CC}. Transistor 56 presents its base terminal shortcircuited with the collector terminal, and a current source 49 is provided between the collector of transistor 56 and output node 41 of error amplifier 27, for supplying current I_{b} to transistor 48.

Node 60 between the collector terminals of transistors 55 and 53 is connected to the collector terminal of a further transistor 61 forming, with transistor 62, a 1:K ratio current mirror circuit 63. Transistors 61 and 62 are both PNP types, and present mutually connected base terminals, and emitter terminals connected to supply line 58. Transistor 61 presents its collector terminal shortcircuited with its base terminal; transistor 62 presents its collector terminal connected to one terminal of resistor 43 via node 64; and node 64 is connected to the negative input of hysteresis comparator 44.

As already stated with reference to Fig.2, under steady state operating conditions of the Fig.3 circuit, the current through capacitor 28 is zero, so that only bias current I_{b} generated by source 49 flows through transistor 48, which current also flows through transistor 51 and is mirrored to transistor 53. Similarly, current I_{b} also flows through transistor 56 by which it is mirrored to transistor 55. The same current thus flows through both transistors 55 and 53, while no current flows through transistors 61 and 62, so that node 64 is grounded and the output of hysteresis comparator 44 is high.

Conversely, as stated with reference to Fig.2, an increase DVₒ at the power supply circuit output results in an increase DI in the current of resistor 16, which current flows into capacitor 28 and is injected into output transistor 48, which, at this phase, is supplied with current I_{b} + DI.

Transistor 61 is thus supplied at this phase with current DI, equal to the difference between the current supplied by transistor 55 and that (I_{b} + DI) drawn by transistor 53, and, according to the ratio K between the emitter areas of transistors 61 and 62, mirrors it to transistor 62. The resulting current KDI is supplied to resistor 43, which accordingly generates a voltage drop V₁ proportional to variation DVₒ and which, when it exceeds threshold V_{R1}, activates hysteresis comparator 44 for turning off MOS transistor 34.

The advantages of the circuit according to the present invention will be clear from the foregoing description. Firstly, by virtue of detecting variations in output voltage as a function of the current through compensating capacitor 28, the overvoltage detecting components may be integrated in control circuit 8 with no need for a special pin. This therefore provides, not only for fully implementing the overvoltage detecting and limiting circuit on control circuits 8 with an insufficient number of pins, but also, in the case of control circuits with several available pins, for freeing an additional pin for other purposes.

Secondly, by virtue of voltage V₁ supplied to hysteresis comparator 44 being proportional to DVₒ through resistance R₂ of resistor 16, it is possible to adjust the instant at which the hysteresis comparator is activated (and consequently the value of the variation in output voltage Vₒ at which the limiting system is to be activated) by adjusting the value of resistance R₂, with no change in reference potential V_{R1}. This is particularly advantageous in that it provides for producing identical integrated circuits 8 mounted, at the assembly stage, with external components 16 of the appropriate value as required.

Thirdly, by virtue of the reference threshold being compared, not directly with output voltage Vₒ, but with signal V₁ proportional to the variation in output voltage, any errors or percentage inaccuracy in reference voltage V_{R1} and/or in the measurement of current DI result in an activation error of hysteresis comparator 44 as a function of voltage variation DVₒ, and, as compared with the overall error of output voltage Vₒ, are thus reduced by a factor equal to DVₒ/Vₒ.

Fourthly, the solution described is straightforward in design, readily integratable on the control circuit, and of limited bulk.

Finally, the circuit described provides for a high degree of reliability, and may be rendered extremely accurate, despite possible production spread in resistance and the sensitivity of resistor 43 to variations in temperature. In fact, any spread in the resistance of resistor 43 may be overcome by simply calibrating the circuit accordingly, e.g. by adjusting the resistance of resistor 16 as described above, or by calibrating resistor 43; while the sensitivity of resistor 43 to variations in temperature may be overcome quite simply by reference potential V_{R1} varying as a function of temperature in the same way as the resistance of resistor 43.

To those skilled in the art it will be clear that changes may be made to the circuit as described and illustrated herein without, however, departing from the scope of the present invention. In particular, in addition to power supply circuits, as described herein, the circuit according to the present invention may also be applied to other types of devices having an output at which overvoltage is to be detected and possibly limited, and comprising error amplifiers having a feedback branch which, under steady state operating conditions, is not supplied with current, and, in the event of a variation in the output voltage of the device, is supplied with current instantly proportional to the voltage variation.

Finally, though specially designed for integration within control circuit 8 with no need for additional pins, the circuit according to the present invention may also be applied to devices involving no restriction in the number of pins, or in which the detecting circuit need not necessarily be integrated.

The same design solution may also be applied for detecting and possibly limiting negative variations in set voltage, in which case also, current only flows through the feedback capacitor, though inverted as compared with the example described, under other than steady state operating conditions of the device. In this case, appropriate changes may obviously be required to the detecting and limiting circuit.

## Claims

1. A device (1), comprising an error amplifier (27) and a control portion (30, 31, 34) cascade connected to each other, with said control portion having a device output terminal (12a) at an output voltage (v₀); and said error amplifier (27) having an input (19) connected to said device output terminal (12a) and receiving a signal indicative of the device output potential (V₀), and an output (41) connected to an input of said control portion and supplying thereto an error signal; said device (1) further comprising a feedback branch (28) connected between said input (19) and said output (41) of said error amplifier (27); said device further comprising a circuit (40) for detecting voltage variations in relation to a set value, characterized in that the circuit comprises a current sensor (40) connected to said feedback branch (28) for detecting the current (DI) through said feedback branch and generating a signal proportional to variations in said output potential (V₀) at said output terminal.

2. A device as claimed in Claim 1, comprising a circuit (49) for biasing said error amplifier (27) and generating a bias current (I_{b}) supplied to said output (41) of said error amplifier; characterized by the fact that said current sensor (40) comprises means (52) for detecting the instantaneous current through said output (41) of said error amplifier (27); and subtracting means (60) having inputs connectable to said bias circuit (49) and connected to said detecting means (52) for generating a signal (DI) equal to the difference between said instantaneous current and said bias current.

3. A device as claimed in Claim 2, wherein said error amplifier (27) comprises an output stage including a transistor (48) having a first terminal connected to said bias circuit (49) and to said feedback branch (28); characterized by the fact that said detecting means comprise a first current mirror circuit (52) having an input terminal connectable to a second terminal of said transistor (48), and an output terminal connected to the output terminal of a second current mirror circuit (57) having an input connectable to said bias circuit (49); said output terminals of said first and second current mirror circuits (52, 57) forming a node (60) connected to the output (42) of said current sensor (40) and defining said subtracting means.

4. A device as claimed in any one of the foregoing Claims from 1 to 3, characterized by the fact that said feedback branch (28) is purely capacitive.

5. A device as claimed in any one of the foregoing Claims from 1 to 4, characterized by the fact that it comprises a voltage limiting circuit (43, 44) having an input (64) connected to said current sensor (40) and an output connected to said control portion (30,31,34) of said device (1).

6. A device as claimed in Claim 5, characterized by the fact that said voltage limiting circuit (43, 44) comprises a current/voltage converter (43) having an input connected to said current sensor (40) and an output connected to a comparator (44); said comparator receiving a reference signal (V_{R1}) and having an output connected to said control portion (30,31,34) of said device (1).

7. A device as claimed in Claim 6, characterized by the fact that said comparator comprises a hysteresis comparator (44).

8. A device according to any of the preceding claims, characterized in that said device (1) is a switch voltage power supply circuit and said control portion comprises a control stage (30, 31) and a switch element (34), said switch element being driven by said control stage and comprising said output terminal (12a) for connection to a load (14).

## Patentansprüche

1. Vorrichtung (1) mit einem Fehlerverstärker (27) und einem kaskadenförmig nachgeschalteten Steuerabschnitt (30, 31, 34), wobei der Steuerabschnitt einen auf einer Ausgangsspannung (V₀) liegenden Vorrichtungsausgangsanschluß (12a) aufweist; wobei der Fehlerverstärker (27) einen Eingang (19), welcher an den Vorrichtungsausgangsanschluß (12a) angeschlossen ist und ein Signal empfängt, welches das Vorrichtungsausgangspotential (V₀) angibt, und einen Ausgang (41) besitzt, welcher an den Eingang des Steuerabschnitts angeschlossen ist und diesem ein Fehlersignal zuführt, wobei die Vorrichtung (1) ferner einen Rückkopplungszweig (28) aufweist, welcher zwischen dem Eingang (19) und dem Ausgang (41) des Fehlerverstärkers (27) angeschlossen ist; wobei die Vorrichtung ferner einen Schaltkreis (40) zur Erfassung von Spannungsschwankungen in bezug auf einen Sollwert aufweist, dadurch gekennzeichnet, daß der Schaltkreis einen Stromsensor (40) aufweist, welcher an den Rückkopplungszweig (28) zur Erfassung des Stroms (DI) durch den Rückkoppelzweig angeschlossen ist und ein Signal erzeugt, das proportional zu den Schwankungen in dem Ausgangspotential (V₀) an dem Ausgangsanschluß ist.

2. Vorrichtung nach Anspruch 1 mit einem Schaltkreis (49) zur Vorspannung des Fehlerverstärkers (27) und zum Erzeugen eines Vorstroms (I_{b}), welcher dem Ausgang (41) des Fehlerverstärkers zugeführt ist, gekennzeichnet dadurch, daß der Stromsensor (40) eine Einrichtung (52) zur Erfassung des augenblicklich durch den Ausgang (41) des Fehlerverstärkers (27) fließenden Stromes; und eine Subtraktionseinrichtung (60) mit Eingängen aufweist, welche an den Vorspannungsschaltkreis (49) anschließbar sind und an die Erfassungseinrichtung (52) zur Erzeugung eines Signals (DI), welches gleich der Differenz zwischen dem augenblicklichen Strom und dem Vorstrom ist, angeschlossen ist.

3. Vorrichtung nach Anspruch 2, bei der der Fehlerverstärker (27) eine Ausgangsstufe mit einem Transistor (48) aufweist, welcher einen ersten Anschluß besitzt, der an den Vorspannungsschaltkreis (49) und den Rückkopplungszweig (28) angeschlossen ist, gekennzeichnet dadurch, daß die Erfassungseinrichtung einen ersten Stromspiegelschaltkreis (52) mit einem an einen zweiten Anschluß des Transistors (48) anschließbaren Eingangsanschluß und einem Ausgangsanschluß, welcher an den Ausgangsanschluß eines zweiten Stromspiegelschaltkreises (57) mit einem an den Vorspannungsschaltkreis (49) anschließbaren Eingang angeschlossen ist, wobei die Ausgangsanschlüsse des ersten und zweiten Stromspiegelschaltkreises (52, 57) einen Knoten (60) bilden, welcher an den Ausgang (42) des Stromsensors (40) angeschlossen ist, und die Subtrahiereinrichtung definieren.

4. Vorrichtung nach einem der vorangehenden Ansprüche 1 bis 3, gekennzeichnet dadurch, daß der Rückkopplungszweig (28) rein kapazitiv ist.

5. Vorrichtung nach einem der vorangehenden Ansprüche 1 bis 4, gekennzeichnet dadurch, daß sie einen Spannungsbegrenzungsschaltkreis (43, 44) mit einem Eingang (64), welcher an den Stromsensor (40) angeschlossen ist, und einen Ausgang aufweist, welcher an den Steuerabschnitt (30, 31, 34) der Vorrichtung (1) angeschlossen ist.

6. Vorrichtung nach Anspruch 5, dadurch gekennzeichnet, daß der Spannungsbegrenzungsschaltkreis (43, 44) einen Strom/Spannungs-Wandler (43) mit einem an den Stromsensor (40) angeschlossenen Eingang und einen an einen Komparator (44) angeschlossenen Ausgang aufweist; wobei der Komparator ein Referenzsignal (V_{R1}) empfängt und einen Ausgang besitzt, welcher an den Kontrollabschnitt (30, 31, 34) der Vorrichtung (1) angeschlossen ist.

7. Vorrichtung nach Anspruch 6, dadurch gekennzeichnet, daß der Komparator einen Hysterese-Komparator (44) aufweist.

8. Vorrichtung nach einem der vorangehenden Ansprüche, dadurch gekennzeichnet, daß die Vorrichtung (1) ein Spannungsschalt-Stromversorgungsschaltkreis ist und der Steuerabschnitt eine Steuerstufe (30, 31) und ein Schaltbauelement (34) aufweist, wobei das Schaltelement durch die Steuerstufe getrieben wird und den Ausgangsanschluß (12a) zum Anschluß an eine Last (14) aufweist.

## Revendications

1. Dispositif (1) comprenant un amplificateur d'erreur (27) et une partie de commande (30, 31, 34) connectés en cascade, la partie de commande ayant une borne de sortie de dispositif (12a) à une tension de sortie (v₀) ; et l'amplificateur d'erreur (27) ayant une entrée (19) connectée à la borne de sortie (12a) du dispositif et recevant un signal indicatif du potentiel de sortie (v₀) du dispositif, et une sortie (41) connectée à une entrée de la partie de commande et lui fournissant un signal d'erreur ; le dispositif (1) comprenant en outre une branche de réaction (28) connectée entre l'entrée (19) et la sortie (41) de l'amplificateur d'erreur (27) ; le dispositif comprenant en outre un circuit (40) pour détecter des variations de tension en relation avec une valeur de réglage ; caractérisé en ce que le circuit comprend un détecteur de courant (40) connecté à la branche de réaction (28) pour détecter le courant (DI) dans la branche de réaction et produire un signal proportionnel aux variations du potentiel de sortie (V₀) sur la borne de sortie.

2. Dispositif selon la revendication 1, comprenant un circuit (49) pour polariser l'amplificateur d'erreur (27) et produire un courant de polarisation (I_{b}) fourni à la sortie (41) de l'amplificateur d'erreur ; caractérisé en ce que le détecteur de courant (40) comprend un moyen (52) pour détecter le courant instantané sur la sortie (41) de l'amplificateur d'erreur (27) ; et un moyen de soustraction (60) ayant des entrées pouvant être connectées au circuit de polarisation (49) et connectées au moyen de détection (52) pour produire un signal (DI) égal à la différence entre le courant instantané et le courant de polarisation.

3. Dispositif selon la revendication 2, dans lequel l'amplificateur d'erreur (27) comprend un étage de sortie comprenant un transistor (48) ayant une première borne connectée au circuit de polarisation (49) et à la branche de réaction (28) ; caractérisé en ce que le moyen de détection comprend un premier circuit de miroir de courant (52) ayant une borne d'entrée pouvant être connectée à une deuxième borne du transistor (48) et une borne de sortie connectée à la borne de sortie d'un deuxième circuit de miroir de courant (57) ayant une entrée pouvant être connectée au circuit de polarisation (49) ; les bornes de sortie des premier et deuxième circuits de miroir de courant (52, 57) formant un noeud (60) connecté à la sortie (42) du détecteur de courant (40) et définissant le moyen de soustraction.

4. Dispositif selon l'une quelconque des revendications 1 à 3, caractérisé en ce que la branche de réaction (28) est purement capacitive.

5. Dispositif selon l'une quelconque des revendications 1 à 4, caractérisé en ce qu'il comprend un circuit de limitation de tension (43, 44) ayant une entrée (64) connectée au détecteur de courant (40) et une sortie connectée à la partie de commande (30, 31, 34) du dispositif (1).

6. Dispositif selon la revendication 5, caractérisé en ce que le circuit de limitation de courant (43, 44) comprend un convertisseur courant/tension (43) ayant une entrée connectée au détecteur de courant (40) et une sortie connectée à un comparateur (44) ; le comparateur recevant un signal de référence (V_{R1}) et ayant une sortie connectée à la partie de commande (30, 31, 34) du dispositif (1).

7. Dispositif selon la revendication 6, caractérisé en ce que le comparateur comprend un comparateur à hystérésis (44).

8. Dispositif selon l'une quelconque des revendications précédentes, caractérisé en ce que le dispositif (1) est un circuit d'alimentation de tension à découpage et la partie de commande comprend un étage de commande (30, 31) et un élément de commutation (34), l'élément de commutation (34) étant piloté par l'étage de commande et comprenant la borne de sortie (12a) pour établir une connexion avec une charge (14).
